# EUROPEAN PATENT SPECIFICATION

(11) **EP 3 203 032 B1**
(45) Date of publication and mention of the grant of the patent: **31.03.2021**
(21) Application number: 17154476.0
(22) Date of filing: 02.02.2017
(51) Int. Cl.: F01D 9/04

(54) **METHOD OF CALCULATION OF THE THROAT AREA FOR A VANE OF A GAS TURBINE ENGINE AND OF MODYFING THE VANES**
METHODE ZUR BERECHNUNG DER QUERSCHNITTSFLÄCHE EINES GASTURBINENLEITAPPARATS UND ZUM ÄNDERN DER LEITSCHAUFELN
MÉTHODE POUR CALCULER L'AIRE AU COL D'UNE TUYÈRE DE GUIDAGE DE TURBINE À GAZ ET MÉTHODE POUR MODIFIER LES AUBES STATORIQUES

(30) Priority: 02.02.2016 US 201615013308
(43) Date of publication of application: 09.08.2017
(73) Proprietor: Raytheon Technologies Corporation, Farmington, CT 06032 (US)
(72) Inventor: CHUONG, Conway, Manchester, CT 06040 (US)
(74) Representative: Dehns

(56) References cited:
- EP-A2- 2 540 962
- US-A- 5 174 715
- US-A1- 2002 193 897
- US-A1- 2014 142 889
- US-B1- 7 740 449

## Description

### BACKGROUND

This disclosure relates to a gas turbine engine, and more particularly to a method of calculating a throat area of a section of a gas turbine engine.

Gas turbine engines typically include a compressor section, a combustor section and a turbine section. In general, during operation, air is pressurized in the compressor section and is mixed with fuel and burned in the combustor section to generate hot combustion gases. The hot combustion gases flow through the turbine section, which extracts energy from the hot combustion gases to power the compressor section and other gas turbine engine loads.

The compressor and turbine sections of the gas turbine engine typically include alternating rows of rotating blades and stationary vanes. The rotating blades either create or extract energy from the hot combustion gases that are communicated through the gas turbine engine, and the vanes convert the velocity of the airflow into pressure and prepare the airflow for the next set of blades.

The vanes are typically arranged in an array such that adjacent vanes of a vane assembly are circumferentially disposed about a longitudinal centerline axis of the gas turbine engine. The hot combustion gases that are communicated through the gas turbine engine flow through a throat area that extends between the adjacent vanes of the vane assembly. The throat area controls the pressure ratio and mass flow rate of the gas turbine engine.

The throat area associated with a particular section of a gas turbine engine, such as a turbine section, can be calculated using a series of gauges that measure the location of a pressure side and suction side of each airfoil of a vane assembly associated with the turbine section. These measurements can be used to mathematically calculate a throat area associated with the vane assembly. This method assumes axi-symmetric flow path surfaces and ignores any undulations or flow path end wall contouring of the platforms of the vane assembly, which potentially invalidate the calculation.

US 2014/142889 A1 discloses a prior art method as set forth in the preamble of claim 1.

US 7 740 449 B1, US 2002/193897 A1, US 5 174 715 A and EP 2 540 962 A2 disclose other prior art methods.

### SUMMARY

According to the invention there is provided a method of modifying a vane segment of a gas turbine engine according to claim 1.

In a non-limiting embodiment, the plurality of sections are trapezoidal shaped.

In a further non-limiting embodiment of any of the foregoing methods, the plurality of sections are triangular shaped.

In a further non-limiting embodiment of any of the foregoing methods, a first portion of the plurality of sections are trapezoidal shaped and a second portion of the plurality of sections are triangular shaped.

In a further non-limiting embodiment of any of the foregoing methods, the method includes calculating an error value is associated with the throat area.

In a further non-limiting embodiment of any of the foregoing methods, the step of adjusting the throat area is based on the error value.

In a further non-limiting embodiment of any of the foregoing methods, the step of calculating includes measuring a distance between a first portion of the plurality of inspections points located on an outer diameter portion of the boundary and a second portion of the plurality of inspection points located on an inner diameter portion of the boundary.

In a further non-limiting embodiment of any of the foregoing methods, the boundary includes an outer diameter portion, an inner diameter portion, a suction side portion and a pressure side portion and the plurality of inspection points are selected on each of the outer diameter portion, the inner diameter portion, the suction side portion and the pressure side portion.

In a further non-limiting embodiment of any of the foregoing methods, the step of radially dividing includes measuring a radial distance between a plurality of outer diameter portions and a plurality of inner diameter portions of a boundary of the throat area.

In a further non-limiting embodiment of any of the foregoing methods, the method includes adjusting the throat area calculation based on an error value associated with a trailing edge location of the section.

The end wall contoured flow path may include a plurality of undulations.

The various features and advantages of this disclosure will become apparent to those skilled in the art from the following detailed description. The drawings that accompany the detailed description can be briefly described as follows.

### BRIEF DESCRIPTION OF THE DRAWINGS

Figure 1 illustrates a schematic, cross-sectional view of a gas turbine engine.
Figures 2A and 2B illustrate a segment of a section of a gas turbine engine.
Figure 3 schematically illustrates a throat area associated with a segment of a section of a gas turbine engine.
Figure 4 schematically illustrates a method of calculating a throat area of a segment of a section of a gas turbine engine.

### DETAILED DESCRIPTION

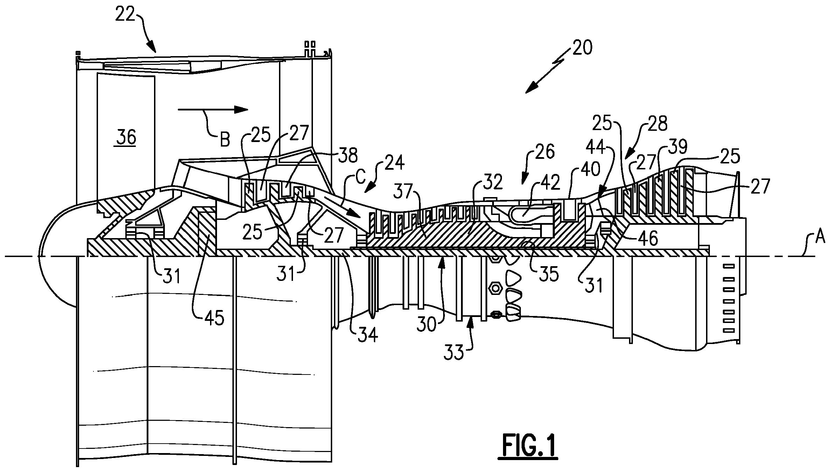

Figure 1 schematically illustrates a gas turbine engine 20. The exemplary gas turbine engine 20 is a two-spool turbofan engine that generally incorporates a fan section 22, a compressor section 24, a combustor section 26 and a turbine section 28. Alternative engines might include an augmentor section (not shown) among other systems for features. The fan section 22 drives air along a bypass flow path B, while the compressor section 24 drives air along a core flow path C for compression and communication into the combustor section 26. The hot combustion gases generated in the combustor section 26 are expanded through the turbine section 28. Although depicted as a turbofan gas turbine engine in the disclosed non-limiting embodiment, it should be understood that the concepts described herein are not limited to turbofan engines and these teachings could extend to other types of engines, including but not limited to, three-spool engine architectures.

The gas turbine engine 20 generally includes a low speed spool 30 and a high speed spool 32 mounted for rotation about an engine centerline longitudinal axis A. The low speed spool 30 and the high speed spool 32 may be mounted relative to an engine static structure 33 via several bearing systems 31. It should be understood that other bearing systems 31 may alternatively or additionally be provided.

The low speed spool 30 generally includes an inner shaft 34 that interconnects a fan 36, a low pressure compressor 38 and a low pressure turbine 39. The inner shaft 34 can be connected to the fan 36 through a geared architecture 45 to drive the fan 36 at a lower speed than the low speed spool 30. The high speed spool 32 includes an outer shaft 35 that interconnects a high pressure compressor 37 and a high pressure turbine 40. In this embodiment, the inner shaft 34 and the outer shaft 35 are supported at various axial locations by bearing systems 31 positioned within the engine static structure 33.

A combustor 42 is arranged between the high pressure compressor 37 and the high pressure turbine 40. A mid-turbine frame 44 may be arranged generally between the high pressure turbine 40 and the low pressure turbine 39. The mid-turbine frame 44 can support one or more bearing systems 31 of the turbine section 28. The mid-turbine frame 44 may include one or more airfoils 46 that extend within the core flow path C.

The inner shaft 34 and the outer shaft 35 are concentric and rotate via the bearing systems 31 about the engine centerline longitudinal axis A, which is co-linear with their longitudinal axes. The core airflow is compressed by the low pressure compressor 38 and the high pressure compressor 37, is mixed with fuel and burned in the combustor 42, and is then expanded over the high pressure turbine 40 and the low pressure turbine 39. The high pressure turbine 40 and the low pressure turbine 39 rotationally drive the respective high speed spool 32 and the low speed spool 30 in response to the expansion.

In a non-limiting embodiment, the gas turbine engine 20 is a high-bypass geared aircraft engine. In a further example, the gas turbine engine 20 bypass ratio is greater than about six. The geared architecture 45 can include an epicyclic gear train, such as a planetary gear system or other gear system. The example epicyclic gear train has a gear reduction ratio of greater than about 2.3, and in another example is greater than about 2.5:1. The geared turbofan enables operation of the low speed spool 30 at higher speeds, which can increase the operational efficiency of the low pressure compressor 38 and low pressure turbine 39 and render increased pressure in a fewer number of stages.

The pressure ratio of the low pressure turbine 39 can be pressure measured prior to the inlet of the low pressure turbine 39 as related to the pressure at the outlet of the low pressure turbine 39 and prior to an exhaust nozzle of the gas turbine engine 20. In one non-limiting embodiment, the bypass ratio of the gas turbine engine 20 is greater than about ten, the fan diameter is significantly larger than that of the low pressure compressor 38, and the low pressure turbine 39 has a pressure ratio that is greater than about five. It should be understood, however, that the above parameters are only exemplary of one embodiment of a geared architecture engine and that the present disclosure is applicable to other gas turbine engines, including direct drive turbofans.

In this embodiment of the exemplary gas turbine engine 20, a significant amount of thrust is provided by the bypass flow path B due to the high bypass ratio. The fan section 22 of the gas turbine engine 20 is designed for a particular flight condition--typically cruise at about 0.8 Mach and about 35,000 feet (10,668 m). This flight condition, with the gas turbine engine 20 at its best fuel consumption, is also known as bucket cruise Thrust Specific Fuel Consumption (TSFC). TSFC is an industry standard parameter of fuel consumption per unit of thrust.

Fan Pressure Ratio is the pressure ratio across a blade of the fan section 22 without the use of a Fan Exit Guide Vane system. The low Fan Pressure Ratio according to one non-limiting embodiment of the example gas turbine engine 20 is less than 1.45. Low Corrected Fan Tip Speed is the actual fan tip speed divided by an industry standard temperature correction of [(Tram °R) / (518.7 °R)] ^{0.5}, where T represents the ambient temperature in degrees Rankine (°R = K x 9/5). The Low Corrected Fan Tip Speed according to one non-limiting embodiment of the example gas turbine engine 20 is less than about 1150 fps (351 m/s).

Each of the compressor section 24 and the turbine section 28 may include alternating rows of rotor assemblies and vane assemblies (shown schematically) that carry airfoils that extend into the core flow path C. For example, the rotor assemblies can carry a plurality of rotating blades 25, while each vane assembly can carry a plurality of vanes 27 that extend into the core flow path C. The blades 25 of the rotor assemblies create or extract energy (in the form of pressure) from the core airflow that is communicated through the gas turbine engine 20 along the core flow path C. The vanes 27 of the vane assemblies direct the core airflow to the blades 25 to either add or extract energy.

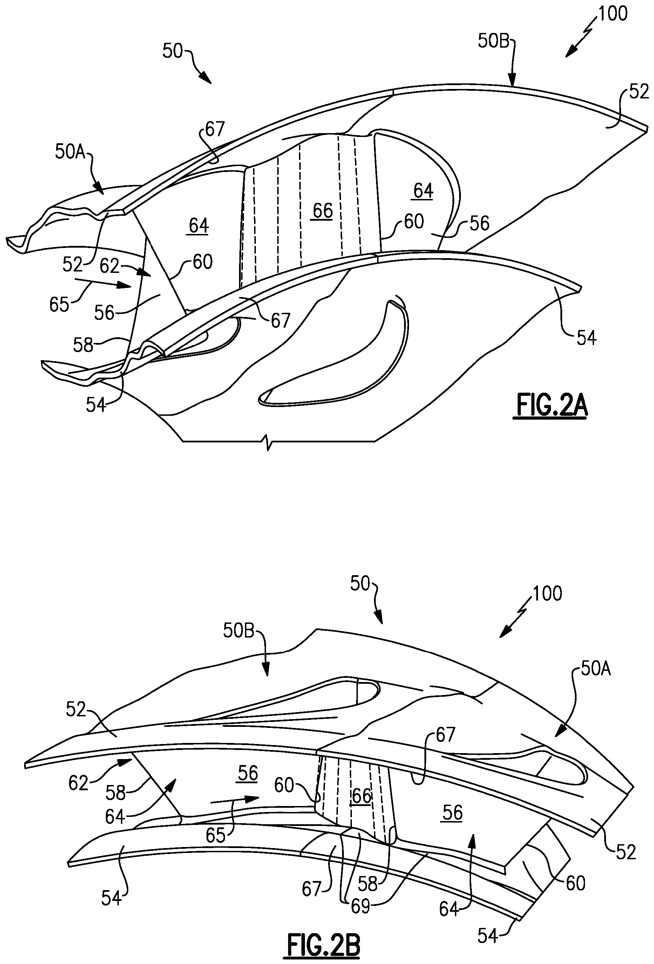

Figures 2A and 2B illustrate a vane segment 50 that can be incorporated into a section 100 of a gas turbine engine, such as the gas turbine engine 20 of Figure 1. In this embodiment, the section 100 is the turbine section 28 of the gas turbine engine 20 and the vane segment 50 is part of a vane assembly disposed within the turbine section 28. However, other sections of a gas turbine engine 20 could also benefit from the teachings of this disclosure, including but not limited to, the compressor section and the mid-turbine frame.

The vane segment 50 can include a single annular structure or a plurality of vane segments 50 could be mechanically attached to one another and annularly disposed about the engine centerline axis A to form a full-ring vane assembly. The vane segment 50 could include one or more airfoils (or vanes) 56. In this particular embodiment, the section 100 includes a first vane segment 50A and a second vane segment 50B each having a single airfoil 56.

The first and second vane segments 50A, 50B include an outer diameter platform 52 and an inner diameter platform 54 spaced from the outer diameter platform 52. The airfoils 56 extend between the outer diameter platform 52 and the inner diameter platform 54. The airfoils 56 may extend radially across an annulus between the outer diameter platform 52 and the inner diameter platform 54. Each airfoil 56 includes a leading edge 58, a trailing edge 60, a pressure side 62 and a suction side 64. The airfoils 56 axially extend between the leading edge 58 and the trailing edge 60 and circumferentially extend between the pressure side 62 and the suction side 64.

A gas path 65 is communicated axially downstream through the gas turbine engine 20 along the core flow path C (Figure 1) in a direction that extends from the leading edges 58 toward the trailing edges 60 of the airfoils 56. The gas path 65 represents the communication of core airflow across the airfoils 56 and through the spaces that extend between the adjacent airfoils 56 of the first and second vane segments 50A, 50B. The space that extends between adjacent airfoils 56 of the vane segments 50A, 50B is referred to as a throat area 66.

As best illustrated in Figure 2B, the inner diameter platform 54 and the outer diameter platform 52 of one or both of the first and second vane segments 50A, 50B include end walls 67 that establish the radially outer and radially inner flow path boundaries of the gas path 65. One or more of the end walls 67 can include undulations 69 that provide a contoured end wall surface. The undulations 69 may reduce friction losses that can occur as the airflow of the gas path 65 is communication through the section 100, thereby increasing engine efficiency. However, these undulations 69 can also add difficulty in calculating the throat area 66 using known throat area calculation methodologies.

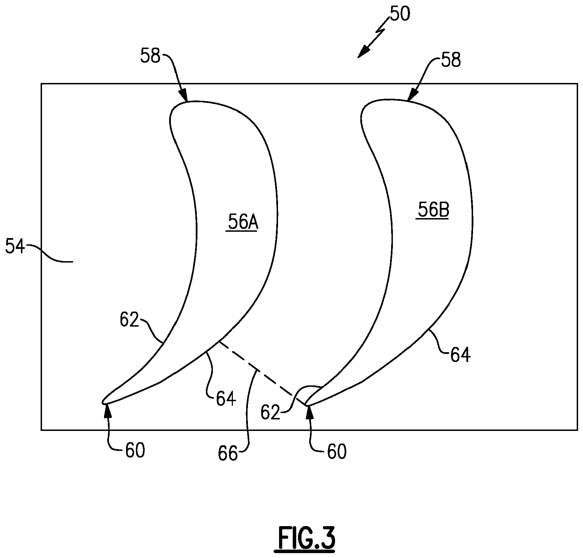

Figure 3 schematically illustrates a throat area 66 of a vane segment 50. The throat area 66 extends between a first airfoil 56A and a second, adjacent airfoil 56B of the vane segment 50. The throat area 66 of the vane segment 50 is a planar opening with a periphery bounded in a radial direction by the outer diameter platform 52 (shown in Figure 2) and the inner diameter platform 54 and peripherally bounded in the circumferential direction by the suction side 64 of the first airfoil 56A and the trailing edge 60 of the second airfoil 56B (at the pressure side 62). Of course, a full ring vane assembly would include a plurality of throat areas that extend between adjacent airfoils. The throat area 66 of the vane segment 50 is an important parameter that may influence engine efficiency. Therefore, the throat area 66 must be periodically measured and calculated to verify clearances in the core flow path C.

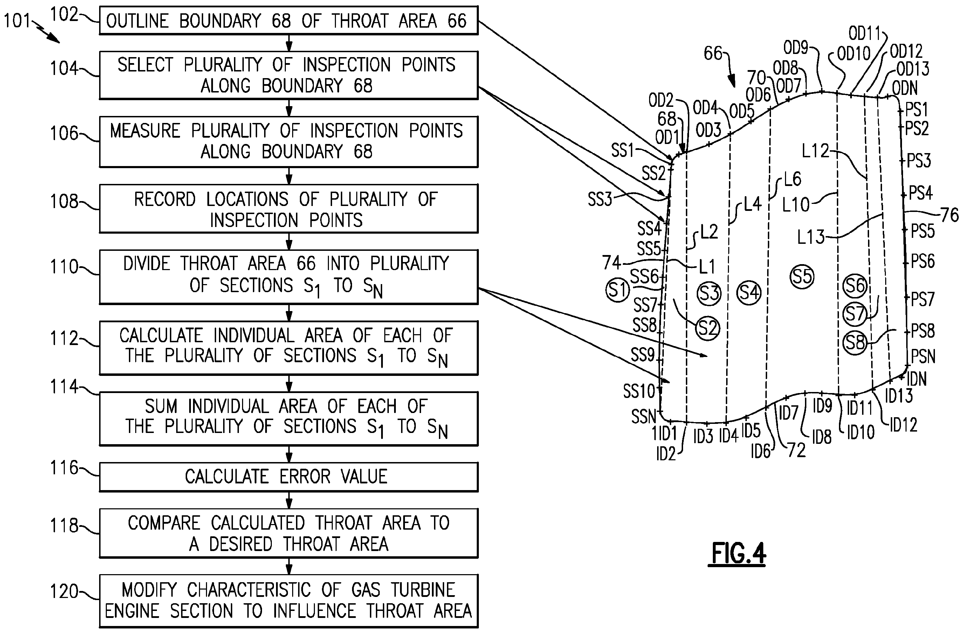

Figure 4, with continued reference to the previous Figures, schematically illustrates an exemplary method 101 of calculating a throat area 66 of a section of a gas turbine engine. In one embodiment, the method 101 can be used to calculate a throat area 66 associated with a turbine vane assembly of the gas turbine engine, although other sections could also benefit from the teachings of this disclosure. The method 101 may be particularly useful for calculating a throat area on segments of the gas turbine engine that include flow path end wall contouring (see, e.g., undulations 69 of end walls 67 illustrated by Figure 2B).

The method begins at step block 102 by outlining a boundary 68 of the throat area 66. The boundary 68 is outlined using a CAD model of a section of the gas turbine engine. A person of ordinary skill in the art having the benefit of this disclosure would be able to select and outline the boundary 68 of the throat area 66 by referencing a CAD model.

The boundary 68 is an outer periphery of the throat area 66. In this embodiment, the boundary 68 extends radially between an outer diameter portion 70 and an inner diameter portion 72 and extends circumferentially between a suction side portion 74 and a pressure side portion 76. The outer diameter portion 70 and the inner diameter portion 72 represent the locations where the throat area 66 is bounded by the outer diameter platform 52 and the inner diameter platform 54, respectively (see Figures 2A, 2B). The outer diameter portion 70 and the inner diameter portion 72 may be contoured to reflect any undulations 69 formed in the end walls 67 of the outer diameter platform 52 and/or the inner diameter platform 54. In other words, the outer diameter portion 70 and the inner diameter portion 72 may extend nonlinearly as shown. In addition, the suction side portion 74 of the boundary 68 represents the portion of the throat area 66 that extends adjacent a suction side 64 of a first airfoil 56A of the section and the pressure side portion 76 represents the portion of the throat area 66 that extends adjacent the pressure side 62 of a second, adjacent airfoil 56B of the section (see, for example, the vane segment 50 of Figure 3). The suction side portion 74 and the pressure side portion 76 are linear in this embodiment.

Next, at step block 104, a plurality of inspection points (marked in Figure 4 with a + sign) are selected along the boundary 68 of the throat area 66. For example, a plurality of inspection points OD₁ through OD_{N} are selected along the outer diameter portion 70, a plurality of inspection points ID₁ through ID_{N} are selected along the inner diameter portion 72, a plurality of inspection points SS₁ through SS_{N} are selected along the suction side portion 74 and a plurality of inspection points PS₁ through PS_{N} are selected along the pressure side portion 76. In one embodiment, the locations of these various inspection points may be specified in an engineering print or CAD model of the section of the gas turbine engine. However, the plurality of inspection points may also be selected using other known methodologies.

The plurality of inspection points of the boundary 68 of the throat area 66 can be measured at step block 106. For example, each of the plurality of inspection points can be measured on an actual casting of the section of the gas turbine engine using a coordinate measuring machine (CMM). Other measuring techniques are also contemplated as within the scope of this disclosure. The actual locations of the plurality of inspection points of the boundary 68 can be recorded at step block 108, including, to the extent the location is incorrect, a recordation of an out-of-nominal distance associated with each of the plurality of inspection points. As discussed below, the CMM data is later used to calculate the area of a plurality of sections of the throat area 66.

At step block 110, the throat area 66 is divided into a plurality of sections S₁ through S_{N}. The throat area 66 is radially divided into the plurality of sections S_{N} by drawing radial lines L₁ through L_{N} from at least a first portion of the plurality of inspection points OD₁ through OD_{N} to a corresponding second portion of the plurality of inspection points ID₁ through ID_{N}. In this embodiment, the inspection points OD₂ and ID₂ are connected by radial line L₂ that defines a radial distance, inspection points OD₄ and ID₄ are connected by radial line L₄ that defines a radial distance, inspection points OD₆ and ID₆ are connected by radial line L₆ that defines a radial distance, inspection points OD₁₀ and ID₁₀ are connected by radial line L₁₀ that defines a radial distance, inspection points OD₁₂ and ID₁₂ are connected by radial line L₁₂ that defines a radial distance, and inspection points OD₁₃ and ID₁₃ are connected by a radial line L₁₃ that defines a radial distance. This is but one example of how the throat area 66 could be divided, and it should be understood that the throat area 66 could be divided into greater or fewer sections than are illustrated in this embodiment. The division of the throat area 66 into the plurality of sections S₁ through S_{N} may also depend on the design of the section for which the throat area is being calculated. That is, the throat areas 66 of different parts may be divided into different numbered and shaped sections.

The plurality of sections S₁ through S_{N} that divide the throat area 66 may embody a variety of shapes. For example, the plurality of sections S₁ through S_{N} can be trapezoidal shaped. In another embodiment, the plurality of sections S₁ through S_{N} can be triangular shaped. In yet another embodiment, a first portion of the plurality of sections S₁ through S_{N} are trapezoidal shaped and a second portion of the plurality of sections S₁ through S_{N} are triangular shaped sections. Other shapes are also contemplated. For example, each shape may be one in which an area of the shape can be easily mathematically calculated.

Next, at step block 112, an individual area of each of the plurality of sections S₁ through S_{N} is calculated. A person of ordinary skill in the art having the benefit of this disclosure would understand how to calculate the area of each of the plurality of sections S₁ through S_{N}. For example, as is known, the area of a triangle can be calculated using the formula A=½(b)(h), where b is the length of the base of the triangle and h is the height of the triangle. In another example, the area of a trapezoid can be calculated using the formula ½(b₁ + b₂)h, where b₁ and b₂ are the lengths of the bases and h is the height. In this embodiment, the lengths of the radial lines L₁ through L_{N} can be used as the "h" values in the area formulas. These radial distances are measured and calculated from the CMM inspection data from step block 108. At step block 114, the individual areas of each of the plurality of sections S₁ through S_{N} can be summed to calculate the throat area 66.

An error value associated with the throat area 66 calculation can optionally be calculated at step block 116. It may be necessary to calculate the error value associated with the throat area 66 calculation because the airfoil 56 of a section can be cast with a trailing edge 60 that is shorter or longer (due to shrinkage error) than defined by the engineering print or CAD model of the section. The calculated throat area 66 can be adjusted based on the error value calculated at step block 116. The error value may also be added to account for slight inabilities of the formula to measure the exact flow area value that can result from a coarse number of divisions of the flow area surface. Additional methods may be incorporated to account for throat area 66 value effects from the trailing edge 60 location.

At step block 118, the calculated throat area is compared to a desired throat area. The desired throat area is a predefined value and may be based on a desired pressure ratio and mass flow rate of the gas turbine engine section, among other design criteria. In another non-limiting embodiment, the desired throat area is established by aero performance engineers in order to optimize the efficiency of the gas turbine engine. The throat area impacts fuel efficiency, cost to operate and durability of the gas turbine engine.

If the calculated throat area is outside of an acceptable tolerance compared to the desired throat area, a design characteristic of the section of the gas turbine engine is modified at step block 120. Adjusting the design characteristic of the gas turbine engine section includes cutting or trimming a portion of the section to remove material from the section. The gas turbine engine section is a vane segment and cutting or trimming may include trimming a trailing edge of an airfoil of the vane segment. The cutting or trimming procedure may be accomplished by machining, grinding, or electrical discharge machining the section to remove material from the section and thereby influence the throat area 66 of the section. The procedure described with reference to Figure 4 may be particularly useful for confirming that parts being received from vendors are within specified manufacturing tolerances.

Although the different non-limiting embodiments are illustrated as having specific components, the embodiments of this disclosure are not limited to those particular combinations. It is possible to use some of the components or features from any of the non-limiting embodiments in combination with features or components from any of the other non-limiting embodiments.

It should be understood that like reference numerals identify corresponding or similar elements throughout the several drawings. It should also be understood that although a particular component arrangement is disclosed and illustrated in these exemplary embodiments, other arrangements could also benefit from the teachings of this disclosure.

The foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

## Claims

1. A method of modifying a vane segment (50) of a gas turbine engine (20), the method comprising:
calculating a throat area (66) of the vane segment (50) by radially dividing the throat area (66) into a plurality of sections (S1-S8);
prior to radially dividing the throat area (66), outlining a boundary (68) of the throat area (66) of the vane segment (50) by referencing a CAD model of the vane segment (50) by selecting a plurality of inspection points (OD1-N, ID1-N, SS1-N, PS1-N) along the boundary (68) of the throat area (66), wherein the throat area (66) is radially divided into the plurality of sections (S1-28) by at least one radial line (L₁-L_{N}) drawn from at least a first portion of the plurality of inspection points (OD₁ - OD_{N}) to a corresponding second portion of the plurality of inspection points (ID₁ - ID_{N});
measuring a location of each of the plurality of inspection points (OD1-N...PS1-N) using a coordinate measuring machine (CMM); and
calculating an individual area associated with each of the plurality of sections (S1-S8), and summing the individual areas to calculate the throat area (66), the vane segment (50) including a first platform (52) and a second platform (54) and a first airfoil (56A) and a second airfoil (56B) extending between the first platform (52) and the second platform (54);
**characterised in that**:
the method further comprises cutting or trimming a portion of the vane segment (50) based on the calculated throat area (66).

2. The method as recited in claim 1, wherein cutting or trimming the portion of the vane segment (50) includes trimming a trailing edge (60) of at least one of the first airfoil (56A) and the second airfoil (56B).

3. The method as recited in claim 1 or 2, wherein cutting or trimming the portion of the vane segment (50) includes machining the portion to remove material.

4. The method as recited in claim 1 or 2, wherein cutting or trimming the portion of the vane segment (50) includes grinding the portion to remove material.

5. The method as recited in claim 1 or 2, wherein cutting or trimming the portion of the vane segment (50) includes electrical discharge machining the portion to remove material.

6. The method as recited in any preceding claim, comprising comparing the calculated throat area (66) to a desired throat area (66) and cutting or trimming a portion of the vane segment (50) only if the calculated throat area (66) is outside a manufacturing tolerance related to the desired throat area (66).

7. The method as recited in any preceding claim, comprising, prior to outlining a boundary of the throat area, the step of inspecting the vane segment (50) of the gas turbine engine (20), wherein the vane segment (50) includes an end wall contoured flow path (69), at least a portion of the plurality of inspection points (OD1-N...PS1-N) are located along the end wall contoured flow path (69) of the vane segment (50), the location of each of the plurality of inspection points (OD1-N...PS1-N) is measured on an actual casting of the vane segment (50), and calculating the throat area (66) of the vane segment (50) includes portions of the throat area (66) encompassing the end wall contoured flow path (69).

8. The method as recited in claim 7, wherein the end wall contoured flow path (69) includes a plurality of undulations.

9. The method as recited in any preceding claim, comprising adjusting the throat area calculation based on an error value associated the calculated throat area (66).

10. The method as recited in any preceding claim, wherein the plurality of sections (S1 - S8) are trapezoidal-shaped.

11. The method as recited in any of claims 1 to 9, wherein the plurality of sections (S1 - S8) are triangular-shaped.

## Patentansprüche

1. Methode zum Ändern eines Leitschaufelsegments (50) einer Gasturbine (20), wobei die Methode Folgendes umfasst:
Berechnen einer Querschnittsfläche (66) des Leitschaufelsegments (50) durch radiales Teilen der Querschnittsfläche (66) in eine Vielzahl von Abschnitten (S1-S8) ;
vor dem radialen Teilen der Querschnittsfläche (66) Konturieren einer Begrenzung (68) der Querschnittsfläche (66) des Leitschaufelsegments (50) durch Referenzieren eines CAD-Modells des Leitschaufelsegments (50) durch Auswählen einer Vielzahl von Inspektionspunkten (OD1-N, ID1-N, SS1-N, PS1-N) entlang der Begrenzung (68) der Querschnittsfläche (66), wobei die Querschnittsfläche (66) radial in die Vielzahl von Abschnitten (S1-28) durch mindestens eine radiale Linie (L₁-L_{N}) geteilt wird, die von mindestens einem ersten Teil der Vielzahl von Inspektionspunkten (OD₁-OD_{N}) zu einem entsprechenden zweiten Teil der Vielzahl von Inspektionspunkten (ID₁-ID_{N}) gezeichnet wird;
Messen einer Position von jedem der Vielzahl von Inspektionspunkten (OD1-N...PS1-N) unter Verwendung eines Koordinatenmessgeräts (Coordinate Measuring Machine - CMM); und
Berechnen einer einzelnen Fläche, die jedem von der Vielzahl von Abschnitten (S1-S8) zugeordnet ist, und Summieren der einzelnen Flächen, um die Querschnittsfläche (66) zu berechnen, wobei das Leitschaufelsegment (50) eine erste Plattform (52) und eine zweite Plattform (54) und ein erstes Schaufelprofil (56A) und ein zweites Schaufelprofil (56B), die sich zwischen der ersten Plattform (52) und der zweiten Plattform (54) erstrecken, beinhaltet;
**dadurch gekennzeichnet, dass**:
die Methode ferner das Zuschneiden oder Beschneiden eines Teils des Leitschaufelsegments (50) auf Grundlage der berechneten Querschnittsfläche (66) umfasst.

2. Methode nach Anspruch 1, wobei das Zuschneiden oder Beschneiden des Teils des Leitschaufelsegments (50) das Beschneiden einer Hinterkante (60) von mindestens einem des ersten Schaufelprofils (56A) und des zweiten Schaufelprofils (56B) beinhaltet.

3. Methode nach Anspruch 1 oder 2, wobei das Zuschneiden oder Beschneiden des Teils des Leitschaufelsegments (50) das Bearbeiten des Teils zum Entfernen von Material beinhaltet.

4. Methode nach Anspruch 1 oder 2, wobei das Zuschneiden oder Beschneiden des Teils des Leitschaufelsegments (50) das Schleifen des Teils zum Entfernen von Material beinhaltet.

5. Methode nach Anspruch 1 oder 2, wobei das Zuschneiden oder Beschneiden des Teils des Leitschaufelsegments (50) das funkenerosive Bearbeiten des Teils zum Entfernen von Material beinhaltet.

6. Methode nach einem der vorhergehenden Ansprüche, umfassend das Vergleichen der berechneten Querschnittsfläche (66) mit einer gewünschten Querschnittsfläche (66) und Zuschneiden oder Beschneiden eines Teils des Leitschaufelsegments (50) nur wenn die berechnete Querschnittsfläche (66) außerhalb einer Herstellungstoleranz in Bezug auf die gewünschte Querschnittsfläche (66) liegt.

7. Methode nach einem der vorhergehenden Ansprüche, umfassend vor dem Konturieren einer Begrenzung der Querschnittsfläche den Schritt des Inspizierens des Leitschaufelsegments (50) der Gasturbine (20), wobei das Leitschaufelsegment (50) einen endwandkonturierten Strömungsweg (69) beinhaltet, sich mindestens ein Teil der Vielzahl von Inspektionspunkten (OD1-N...PS1-N) entlang des endwandkonturierten Strömungswegs (69) des Leitschaufelsegments (50) befindet, die Position jedes der Vielzahl von Inspektionspunkten (OD1-N...PS1-N) an einem tatsächlichen Gussteil des Leitschaufelsegments (50) gemessen wird, und das Berechnen der Querschnittsfläche (66) des Leitschaufelsegments (50) Teile der Querschnittsfläche (66) beinhaltet, die den endwandkonturierten Strömungsweg (69) einschließen.

8. Methode nach Anspruch 7, wobei der endwandkonturierte Strömungsweg (69) eine Vielzahl von Wellenformen umfasst.

9. Methode nach einem der vorhergehenden Ansprüche, umfassend das Anpassen der Querschnittsflächenberechnung auf Grundlage eines Fehlerwerts, der der berechneten Querschnittsfläche (66) zugeordnet ist.

10. Methode nach einem der vorhergehenden Ansprüche, wobei die Vielzahl von Abschnitten (S1-S8) trapezförmig ist.

11. Verfahren nach einem der Ansprüche 1 bis 9, wobei die Vielzahl von Abschnitten (S1-S8) dreieckig geformt ist.

## Revendications

1. Méthode pour modifier un segment de tuyère de guidage (50) d'une turbine à gaz (20), la méthode comprenant :
le calcul d'une aire au col (66) du segment de tuyère de guidage (50) en divisant radialement l'aire au col (66) en une pluralité de sections (S1-S8) ;
avant de diviser radialement l'aire au col (66), la délimitation d'une limite (68) de l'aire au col (66) du segment de tuyère de guidage (50) en référençant un modèle CAO du segment de tuyère de guidage (50) en sélectionnant une pluralité de points d'inspection (OD1-N, ID1-N, SS1-N, PS1-N) le long de la limite (68) de l'aire au col (66), dans laquelle l'aire au col (66) est divisée radialement en la pluralité de sections (S1-28) par au moins une ligne radiale (L₁-L_{N}) tirée depuis au moins une première partie de la pluralité de points d'inspection (OD₁-OD_{N}) vers une seconde partie correspondante de la pluralité de points d'inspection (ID₁-ID_{N}) ;
la mesure d'un emplacement de chacun de la pluralité de points d'inspection (OD1-N...PS1-N) en utilisant une machine de mesure de coordonnées (CMM) ; et
le calcul d'une zone individuelle associée à chacune de la pluralité de sections (S1-S8), et l'addition des zones individuelles pour calculer l'aire au col (66), le segment de tuyère de guidage (50) comportant une première plate-forme (52) et une seconde plate-forme (54) et un premier profil aérodynamique (56A) et un second profil aérodynamique (56B) s'étendant entre la première plate-forme (52) et la seconde plate-forme (54) ;
**caractérisée en ce que** :
la méthode comprend en outre la découpe ou le rognage d'une partie du segment de tuyère de guidage (50) sur la base de l'aire au col (66) calculée.

2. Méthode selon la revendication 1, dans laquelle la découpe ou le rognage de la partie du segment de tuyère de guidage (50) comporte le rognage d'un bord de fuite (60) d'au moins l'un du premier profil aérodynamique (56A) et du second profil aérodynamique (56B).

3. Méthode selon la revendication 1 ou 2, dans laquelle le découpage ou le rognage de la partie du segment de tuyère de guidage (50) comporte l'usinage de la partie pour enlever de la matière.

4. Méthode selon la revendication 1 ou 2, dans laquelle le découpage ou le rognage de la partie du segment de tuyère de guidage (50) comporte le meulage de la partie pour enlever de la matière.

5. Méthode selon la revendication 1 ou 2, dans laquelle le découpage ou le rognage de la partie du segment de tuyère de guidage (50) comporte l'usinage par décharge électrique de la partie pour enlever de la matière.

6. Méthode selon une quelconque revendication précédente, comprenant la comparaison de l'aire au col (66) calculée avec une aire au col (66) souhaitée et la découpe ou le rognage d'une partie du segment de tuyère de guidage (50) uniquement si l'aire au col (66) calculée est à l'extérieur d'une tolérance de fabrication liée à l'aire au col (66) souhaitée.

7. Méthode selon une quelconque revendication précédente, comprenant, avant la délimitation d'une limite de l'aire au col, l'étape d'inspection du segment de tuyère de guidage (50) de la turbine à gaz (20), dans laquelle le segment de tuyère de guidage (50) comporte un trajet d'écoulement profilé de paroi d'extrémité (69), au moins une partie de la pluralité de points d'inspection (OD1-N...PS1-N) sont situés le long du trajet d'écoulement profilé de paroi d'extrémité (69) du segment de tuyère de guidage (50), l'emplacement de chacun de la pluralité de points d'inspection (OD1-N...PS1-N) est mesuré sur une pièce coulée réelle du segment de tuyère de guidage (50), et le calcul de l'aire au col (66) du segment de tuyère de guidage (50) comporte des parties de l'aire au col (66) englobant le trajet d'écoulement profilé de paroi d'extrémité (69).

8. Méthode selon la revendication 7, dans laquelle le trajet d'écoulement profilé de paroi d'extrémité (69) comporte une pluralité d'ondulations.

9. Méthode selon une quelconque revendication précédente, comprenant l'ajustement du calcul de l'aire au col sur la base d'une valeur d'erreur associée à l'aire au col (66) calculée.

10. Méthode selon une quelconque revendication précédente, dans laquelle la pluralité de sections (S1 - S8) sont de forme trapézoïdale.

11. Méthode selon l'une quelconque des revendications 1 à 9, dans laquelle la pluralité de sections (S1 - S8) sont de forme triangulaire.
